# EUROPEAN PATENT APPLICATION

(11) **EP 4 524 534 A1**
(43) Date of publication of application: **19.03.2025**
(21) Application number: 22941722.5
(22) Date of filing: 13.05.2022
(51) Int. Cl.: G01L 3/10

(54) **TORQUE SENSOR**

(71) Applicant: Minebea Mitsumi Inc., Kitasaku-gun, Nagano 3890293 (JP)
(72) Inventor: MURAKAMI, Hiroaki, Kitasaku-gun, Nagano 389-0293 (JP); KEBUKAWA, Kouji, Kitasaku-gun, Nagano 389-0293 (JP)
(74) Representative: Winter, Brandl - Partnerschaft mbB
(86) International application number: PCT/JP2022/020236
(87) International publication number: WO 2023/218645

(57) **Abstract**

One problem addressed by the present invention is the further reduction in size of a torque sensor. A torque sensor (100) equipped with a holder (101) which has an inner-circumferential member (110) and an outer-circumferential member (120), a bearing (102) positioned on the inner-circumferential member (110), and a strain sensor (103), wherein: the outer-circumferential member (120) has an elastic section (122); the strain sensor (103) is attached to the elastic section (122); and the elastic section (122) and the strain sensor (103) each extend along a plane which is parallel to the axial direction.

## Description

### Technical Field

The present invention relates to a torque sensor.

### Background Art

A torque sensor of a magnetostrictive type is known as a torque sensor for detecting a force applied to a shaft. For example, Patent Document 1 discloses a strain detection device including a magnetic layer fixed on an outer peripheral surface of a shaft and a detection coil configured to detect a change in magnetic permeability of the magnetic layer.

### Citation List

### Patent Literature

Patent Document 1: JP 05-52679 A

### Summary of Invention

### Technical Problem

When the torque sensor of a magnetostrictive type is used, it is necessary to arrange a detection coil or the like, and thus the entire device around the shaft tends to increase in size. The present invention addresses, as one example, a problem of reducing a size of a torque sensor.

### Solution to Problem

A torque sensor of the present invention includes a holder including an inner peripheral member and an outer peripheral member, a bearing disposed at the inner peripheral member, and a strain sensor. The outer peripheral member includes an elastic part, the strain sensor is attached to the elastic part, and the elastic part and the strain sensor each extend along a plane parallel to an axial direction.

### Brief Description of Drawings

FIG. 1 is a perspective view of a holder and strain sensors of a torque sensor according to a first embodiment being one example of the present invention.
FIG. 2 is a cross-sectional view of the torque sensor according to the first embodiment being one example of the present invention.
FIG. 3 is a cross-sectional view of a torque sensor according to a second embodiment being one example of the present invention.
FIG. 4 is a cross-sectional view of a torque sensor according to a third embodiment being one example of the present invention.
FIG. 5 is a cross-sectional view of a torque sensor according to a fourth embodiment being one example of the present invention.
FIG. 6 is a plan view of a holder and strain sensors of a torque sensor according to a fifth embodiment being one example of the present invention.
FIG. 7 is a cross-sectional view of the torque sensor according to the fifth embodiment being one example of the present invention, and is a cross-sectional view corresponding to an A-A cross section in FIG. 6.
FIG. 8 is a plan view of a holder and strain sensors of a torque sensor according to a sixth embodiment being one example of the present invention.
FIG. 9 is a cross-sectional view of the torque sensor according to the sixth embodiment being one example of the present invention, and is a cross-sectional view corresponding to a B-B cross section in FIG. 6.
FIG. 10 is a perspective view of a holder and strain sensors of a torque sensor according to a seventh embodiment being one example of the present invention.
FIG. 11 is a plan view of a holder and strain sensors of a torque sensor according to an eighth embodiment being one example of the present invention.

### Description of Embodiments

In the description of embodiments of the present invention, for convenience of description, an arrow a direction along a center axis (X axis) of a shaft S is defined as an upper side or one side in an axial direction. An arrow b direction along the X axis is defined as a lower side or the other side in the axial direction. Here, an arrow ab direction is referred to as an up-down direction or the axial direction. However, the up-down direction does not necessarily coincide with a vertical direction. Further, an arrow cd direction is referred to as a radial direction, an arrow c direction away from the X axis is referred to as one side in the radial direction or an outer side, and an arrow d direction approaching the X axis is referred to as the other side in the radial direction or an inner side. Furthermore, a direction along a tangent of a circle about the X axis is referred to as a tangential direction.

### First Embodiment

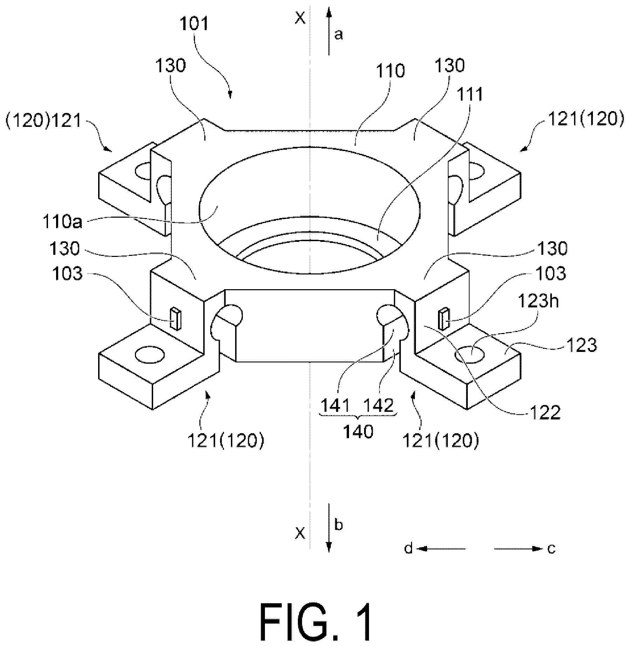

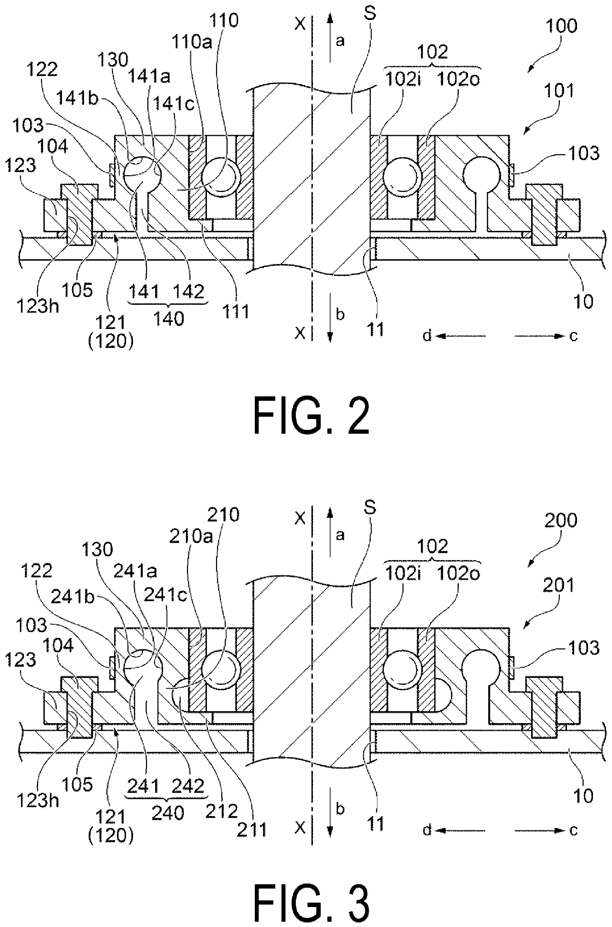

A first embodiment being one example of the present invention will be described below with reference to the drawings. FIG. 1 is a perspective view of a holder 101 and strain sensors 103 used in a torque sensor 100 according to the present embodiment. FIG. 2 is a cross-sectional view illustrating a state of the torque sensor 100 being mounted on the shaft S and an external device 10.

The torque sensor 100 includes the holder 101, a bearing 102, and the strain sensors 103. In the present embodiment, the bearing 102 is a ball bearing including an inner ring 102i, an outer ring 102o, and rolling elements. Note that the bearing 102 is not limited to a ball bearing, and various other bearings, such as a sleeve bearing, for example, may be used.

As illustrated in FIG. 1, the holder 101 has a substantially square tubular shape in plan view, and includes an inner peripheral member 110 and outer peripheral members 120. The inner peripheral member 110 is a member having a tubular shape extending in the axial direction and including an inner peripheral surface 110a having a cylindrical shape about the shaft X. The outer peripheral member 120 is a member disposed at the outer side (on one side in the radial direction, the arrow c direction) of the inner peripheral member 110 in the radial direction.

In the axial direction, a dimension of the inner peripheral member 110 is the same as a dimension of the outer peripheral member 120. In the axial direction, an end surface at the upper side (one side in the axial direction, the arrow a direction) and an end surface at the lower side (the other side in the axial direction, the arrow b direction) of the inner peripheral member 110 are respectively on the same plane with an end surface at the upper side and an end surface at the lower side of the outer peripheral member 120. At end parts of the inner peripheral member 110 at the outer side in the radial direction and at the upper side in the axial direction, four connecting parts 130 having a substantially rectangular shape in plan view protrude radially from the inner peripheral member 110 toward the outer side in the radial direction. The four connecting parts 130 are disposed at rotationally symmetric positions (hereinafter referred to as "four-fold symmetry"), and the positions overlap when rotated by 90° about the X axis.

A flexure element 121 having a rectangular shape in plan view and a substantially L-shape in a side view is connected to each of the connecting parts 130. The flexure element 121 is a deformation part deformed by receiving stress, and is elastically deformed or plastically deformed by receiving stress. The four flexure elements 121 form the outer peripheral members 120 in the present embodiment. Accordingly, the connecting parts 130 connect the inner peripheral member 110 and the outer peripheral members 120. All four flexure elements 121 have the same configuration, and thus only one flexure element 121 will be described in detail below, and detailed description of the other flexure elements 121 will be omitted.

As illustrated in FIG. 2, in the radial direction, the flexure element 121 (outer peripheral member 120) and the inner peripheral member 110 oppose each other across a gap 140 extending in the tangential direction. The gap 140 includes a through hole 141 having a circular shape or a substantially circular shape in a side view, and a slit 142 connected to the lower side of the through hole 141 in the axial direction and having a width (width in the radial direction) narrower than a diameter of the through hole 141. With the presence of the through hole 141, a recessed part 141a recessed toward the outer side in the radial direction is formed at a surface of the flexure element 121 (outer peripheral member 120) at the inner side in the radial direction (other side in the radial direction, the arrow d direction), a recessed part 141b recessed toward the upper side in the axial direction is formed at a surface of the connecting part 130 at the lower side in the axial direction, and a recessed part 141c recessed toward the inner side in the radial direction is formed at a surface of the inner peripheral member 110 at the outer side in the radial direction. Note that the recessed part 141a, the recessed part 141b, and the recessed part 141c are coupled as a smooth, continuous curved surface without boundary parts being defined.

The flexure element 121 (outer peripheral member 120) includes an elastic part 122. That is, part of the flexure element 121 (outer peripheral member 120) functions as the elastic part 122. In a part of the flexure element 121 extending along a plane orthogonal to the radial direction, a region slightly at the upper side of a center in the axial direction (region where the recessed part 141a is formed) is the elastic part 122. Note that the part extending along the plane orthogonal to the radial direction may be a part extending in the axial direction. In the radial direction, the elastic part 122 and the inner peripheral member 110 oppose each other across the gap 140. The elastic part 122 includes the recessed part 141a recessed toward the outer side in the radial direction at the surface opposing the inner peripheral member 110. With the recessed part 141a formed, the elastic part 122 has a thin thickness (thickness in the radial direction) as compared with other parts of the flexure element 121 (outer peripheral member 120), and thus elastic strain deformation readily occurs.

With each flexure element 121 including the elastic part 122, the torque sensor 100, as a whole, includes the plurality of (four in the present embodiment) elastic parts 122. In the circumferential direction, the plurality of elastic parts 122 are disposed side by side at positions having four-fold symmetry at the outer side of the holder 101 (outer side in the radial direction with respect to the inner peripheral member 110) (FIG. 1).

In the radial direction, the strain sensor 103 is attached to a surface at the outer side of the elastic part 122. The elastic part 122 and the strain sensor 103 each extend along a plane parallel to the axial direction (extend along a plane orthogonal to the radial direction). The strain sensor 103 is attached so as to be capable of detecting a strain of the elastic part 122 in a direction along a plane orthogonal to the tangential direction. Accordingly, the strain sensor 103, when being a strain gauge, is attached to the elastic part 122 so as to align an orientation of a grid (gauge) (typically, a longitudinal direction of the strain gauge) to the axial direction. When the strain sensor 103 is a strain gauge, the strain of the elastic part 122 is detected as a change in a resistance value. Note that the strain sensor 103 is not limited to a strain gauge, and may be various other sensors such as a piezoelectric element.

In the radial direction, a fixing part 123 connected to the external device 10 is disposed at the outer side with respect to the elastic part 122 of the flexure element 121. The fixing part 123 is a plate-like part having a rectangular shape extending toward the outer side in the radial direction from an end part of the elastic part 122 at the lower side in the axial direction. A through hole 123h having a circular shape is formed in the vicinity of a central part of the fixing part 123. A bolt 104 inserted into the through hole 123h fixes the flexure element 121 to the external device 10 via a spacer 105. Thus, the holder 101 is fixed to the external device 10.

In the radial direction, the bearing 102 is disposed at the inner side with respect to the inner peripheral member 110 of the holder 101. The bearing 102 is held by the inner peripheral member 110 of the holder 101. The inner ring 102i of the bearing 102 is bonded or press-fitted to an outer peripheral surface (surface at the outer side in the radial direction) of the shaft S having a columnar shape. Thus, the inner ring 102i of the bearing 102 is fixed to the shaft S. The outer ring 102o of the bearing 102 is press-fitted to an inner peripheral surface 110a of the inner peripheral member 110 of the holder 101. The bearing 102 rotatably supports the shaft S with respect to the holder 101. An end part of the shaft S at the lower side in the axial direction protrudes from a through hole 11 of the external device 10 to outside the external device 10.

The holder 101 includes, at an end part at the lower side in the axial direction, a contact part 111 having an annular shape protruding toward the inner side in the radial direction. In the present embodiment, the contact part 111 protrudes toward the inner side in the radial direction from the inner peripheral member 110 of the holder 101. In the axial direction, the contact part 111 is in contact with an end surface of the outer ring 102o of the bearing 102 at the lower side. As a result, the contact part 111 supports the bearing 102 in a state of restricting a downward movement of the bearing 102 in the axial direction.

When the torque sensor 100 is used for a power-assisted bicycle, the shaft S is a crankshaft including pedals. When one of the pedals is pressed, a force acts to incline a pedal side of the shaft S downward in the vertical direction, and thus the bearing 102 tends to move in the radial direction, thereby pressing part of the holder 101 toward the outer side in the radial direction. In the holder 101, stress likely concentrates in the elastic part 122 of the flexure element 121, thereby causing elastic strain deformation at the elastic part 122. This strain deformation is detected by the strain sensor 103.

When a plurality of the elastic parts 122 with the strain sensors 103 attached are disposed, it is possible to detect stress corresponding to the inclination of the shaft S in any direction. In particular, in the torque sensor 100 according to the present embodiment, the four flexure elements 121 is disposed at positions having four-fold symmetry about the X axis, so that stress in all directions with respect to the shaft S can be more accurately detected. The output of the motor of the power-assisted bicycle can be adjusted in accordance with the detected stress.

The torque sensor 100 according to the present embodiment does not use a magnetostrictive sensor but has a simple configuration including the holder 101, the bearing 102, and the strain sensors 103, thereby eliminating the need to dispose, around the shaft S, a detection coil or the like required when a magnetostrictive sensor is used, and thus facilitating a reduction in size of the device. Further, processing such as adherence of a magnetic layer to the shaft S is not necessary, thus facilitating manufacture of the torque sensor 100.

In the torque sensor 100 according to the present embodiment, the flexure element 121 (outer peripheral member 120) and the inner peripheral member 110 oppose each other across the gap 140 in the radial direction, the elastic part 122 includes the recessed part 141a recessed in the radial direction at the surface opposing the inner peripheral member 110, and the recessed part 141b recessed toward the upper side in the axial direction is formed at the surface of the connecting part 130 at the lower side in the axial direction. As a result, in the torque sensor 100 according to the present embodiment, the elastic part 122 of the flexure element 121 is readily strain-deformed, making it possible to detect stress with high sensitivity.

### Second Embodiment

Next, a second embodiment being one example of the present invention will be described with reference to the drawings. FIG. 3 is a cross-sectional view illustrating a state of a torque sensor 200 according to the present embodiment being mounted on the shaft S and the external device 10. The torque sensor 200 has the same configuration as the configuration of the torque sensor 100 according to the first embodiment except that a holder 201 is provided instead of the holder 101. The holder 201 has the same configuration as the configuration of the holder 101 according to the first embodiment except that the holder 201 includes an inner peripheral member 210 instead of the inner peripheral member 110 and includes a gap 240 having a shape slightly different from the shape of the gap 140. Members and components having the same functions and configurations as the members and components of the first embodiment are given the same reference signs, and detailed descriptions of the members and components will be omitted below.

The holder 201 has a substantially square tubular shape in plan view, and includes the inner peripheral member 210 and the outer peripheral member 120. The inner peripheral member 210 is a member having a tubular shape extending in the axial direction and including an inner peripheral surface 210a having a cylindrical shape about the X axis. In the axial direction, a dimension of the inner peripheral member 210 is the same as the dimension of the outer peripheral member 120. In the axial direction, an end surface at the upper side and an end surface at the lower side of the inner peripheral member 210 are respectively on the same plane with the end surface at the upper side and the end surface at the lower side of the outer peripheral member 120. At end parts of the inner peripheral member 210 at the outer sides in the radial direction and at the upper side in the axial direction, four of the connecting parts 130 having a substantially rectangular shape in plan view protrude radially from the inner peripheral member 210 toward the outer side in the radial direction. The four connecting parts 130 are disposed at positions having four-fold symmetry about the X axis.

As illustrated in FIG. 3, in the radial direction, the flexure element 121 (outer peripheral member 120) opposes the inner peripheral member 210 across the gap 240 extending in the tangential direction. The gap 240 includes a through hole 241 having a circular shape or a substantially circular shape in a side view, and a slit 242 connected to the lower side of the through hole 241 in the axial direction slightly closer to an inner side in the radial direction and having a width (dimension in the radial direction) narrower than a diameter of the through hole 241. In the radial direction, a dimension of the slit 242 is greater than a dimension of the slit 142 according to the first embodiment.

With the presence of the through hole 241, a recessed part 241a recessed toward the outer side in the radial direction is formed at the surface of the flexure element 121 (outer peripheral member 120) at the inner side in the radial direction (other side in the radial direction, the arrow d direction), a recessed part 241b recessed toward the upper side in the axial direction is formed at the surface of the connecting part 130 at the lower side in the axial direction, and a recessed part 241c recessed toward the inner side in the radial direction is formed at a surface of the inner peripheral member 210 at the outer side in the radial direction. Note that the recessed part 241a, the recessed part 241b, and the recessed part 241c are connected as a smooth, continuous curved surface without boundary parts being defined. In the radial direction, the elastic part 122 and the inner peripheral member 210 oppose each other across the gap 240.

In the radial direction, the bearing 102 is disposed at the inner side of the inner peripheral member 210 of the holder 201. The bearing 102 is held by the inner peripheral member 210 of the holder 201. The outer ring 102o of the bearing 102 is press-fitted to the inner peripheral surface 210a of the inner peripheral member 210 of the holder 201. The bearing 102 rotatably supports the shaft S with respect to the holder 201.

The holder 201 includes, at an end part at the lower side in the axial direction, a contact part 211 having an annular shape protruding toward the inner side in the radial direction. In the present embodiment, the contact part 211 protrudes toward the inner side in the radial direction from the inner peripheral member 210 of the holder 201. In the axial direction, the contact part 211 is in contact with the end surface of the outer ring 102o of the bearing 102 at the lower side. As a result, the contact part 211 supports the bearing 102 in a state of restricting the downward movement of the bearing 102 in the axial direction.

In the present embodiment, a recessed part 212 having a semicircular shape or a substantially semicircular shape in a side view is formed in the vicinity of an end part of the inner peripheral surface 210a of the inner peripheral member 210 at the lower side in the axial direction. The recessed part 212 is formed in an annular shape about the X axis at the upper side of the contact part 211. An end part of a recessed surface of the recessed part 212 at the lower side in the axial direction is smoothly connected to an end surface of the contact part 211 at the upper side in the axial direction.

The torque sensor 200 according to the present embodiment similarly has the characteristics of the torque sensor 100 according to the first embodiment described above. Further, in the torque sensor 200 according to the present embodiment, with the recessed part 212 being formed in addition to the gap 240 and the width of the slit 242 in the radial direction being larger than the width of the slit 142 (FIG. 2) according to the first embodiment, a thickness of the inner peripheral member 210 in the vicinity of an end part at the lower side in the axial direction is thin, thereby facilitating elastic deformation of the contact part 211 toward the lower side in the axial direction. As a result, even when a preload is applied to the bearing 102 toward the lower side in the axial direction, the contact part 211 is elastically deformed, making it possible to absorb the influence of the preload.

Accordingly, in the torque sensor 200 according to the present embodiment, the preload applied to the bearing 102 is suppressed from appearing as the strain of the elastic part 122, and the strain sensor 103 can detect the stress with high sensitivity.

### Third Embodiment

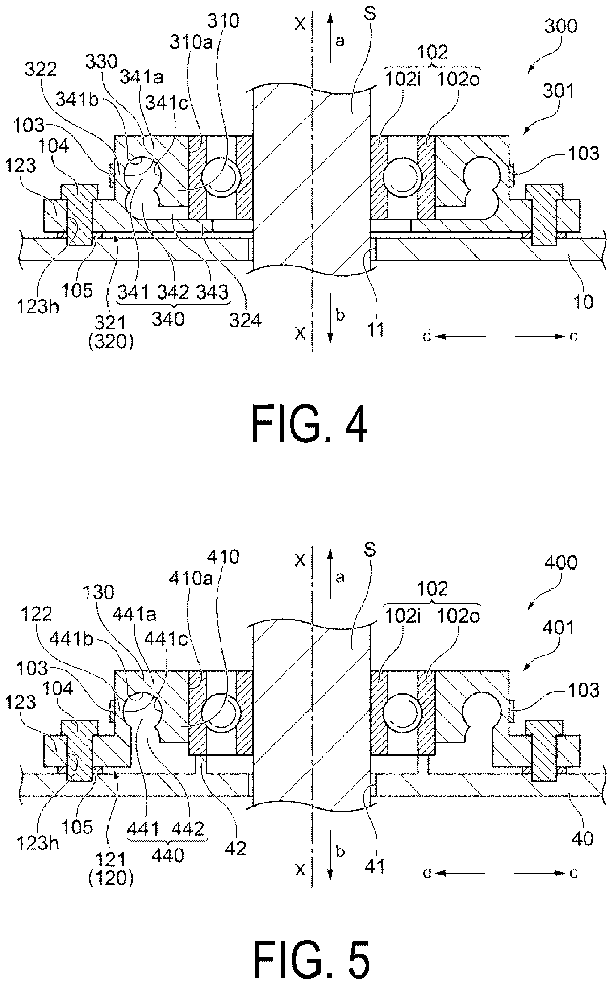

Next, a third embodiment being one example of the present invention will be described with reference to the drawings. FIG. 4 is a cross-sectional view illustrating a state of a torque sensor 300 according to the present embodiment being mounted on the shaft S and the external device 10. The torque sensor 300 has the same configuration as the configuration of the torque sensor 100 according to the first embodiment except that a holder 301 is provided instead of the holder 101. Members and components having the same functions and configurations as the members and components of the first embodiment are given the same reference signs, and detailed descriptions of the members and components will be omitted below.

The holder 301 has a substantially square tubular shape in plan view, and includes an inner peripheral member 310 and an outer peripheral member 320. The inner peripheral member 310 is a member having a tubular shape extending in the axial direction and including an inner peripheral surface 310a having a cylindrical shape about the X axis. The outer peripheral member 320 is a member disposed at an outer side of the inner peripheral member 310 in the radial direction.

In the axial direction, a dimension of the inner peripheral member 310 is less than a dimension of the outer peripheral member 320. In the axial direction, an end surface at the upper side of the inner peripheral member 310 and an end surface at the upper side of the outer peripheral member 320 are on the same plane. At end parts of the inner peripheral member 310 at the outer sides in the radial direction and at the upper side in the axial direction, four connecting parts 330 having a substantially rectangular shape in plan view protrude radially from the inner peripheral member 310 toward the outer side in the radial direction. As with the torque sensor 100 according to the first embodiment, the four connecting parts 330 are disposed at positions having four-fold symmetry about the X axis.

A flexure element 321 having a rectangular shape in plan view and a substantially inverted T-shape in a side view is connected to each of the connecting parts 330. The flexure element 321 is a deformation part deformed by receiving stress, and is elastically deformed or plastically deformed by receiving stress. The four flexure elements 321 form the outer peripheral members 320 in the present embodiment. Accordingly, the connecting parts 330 connect the inner peripheral member 310 and the outer peripheral members 320. All four flexure elements 321 have the same configuration, and thus only one flexure element 321 will be described in detail below, and detailed description of the other flexure elements 321 will be omitted.

As illustrated in FIG. 4, in the radial direction, the flexure element 321 (outer peripheral member 320) opposes the inner peripheral member 310 across a gap 340 extending in the tangential direction. The gap 340 includes a first through hole 341 having a circular shape or a substantially circular shape in a side view, a second through hole 342 connected to the lower side of the first through hole 341 in the axial direction and having a diameter equal to or slightly less than a diameter of the first through hole 341, and a slit 343 extending toward the inner side in the radial direction from an end part of the second through hole 342 at the lower side in the axial direction to the bearing 102.

With the presence of the first through hole 341, a recessed part 341a recessed toward the outer side in the radial direction is formed at a surface of the flexure element 321 (outer peripheral member 320) at the inner side in the radial direction, a recessed part 341b recessed toward the upper side in the axial direction is formed at a surface of the connecting part 330 at the lower side in the axial direction, and a recessed part 341c recessed toward the inner side in the radial direction is formed at a surface of the inner peripheral member 310 at the outer side in the radial direction. Note that the recessed part 341a, the recessed part 341b, and the recessed part 341c are connected as a smooth, continuous curved surface without boundary parts being defined.

The flexure element 321 (outer peripheral member 320) includes an elastic part 322. In a part of the flexure element 321 extending along a plane orthogonal to the radial direction, a region at a slightly upper side of a center in the axial direction (region where the recessed part 341a is formed) is the elastic part 322. In the radial direction, the elastic part 322 and the inner peripheral member 310 oppose each other across the gap 340. The elastic part 322 includes the recessed part 341a recessed toward the outer side in the radial direction at a surface opposing the inner peripheral member 310. With the recessed part 341a formed, the elastic part 322 has a thin thickness (thickness in the radial direction) as compared with other parts of the flexure element 321 (outer peripheral member 320), and elastic strain deformation readily occurs.

As with the torque sensor 100 according to the first embodiment, with each flexure element 321 including the elastic part 322, the torque sensor 300, as a whole, includes the plurality of (four in the present embodiment) elastic parts 322. In the circumferential direction, the plurality of elastic parts 322 are disposed side by side at positions having four-fold symmetry at the outer side of the holder 301 (outer side in the radial direction than the inner peripheral member 310).

In the radial direction, the strain sensor 103 is attached to a surface at the outer side of the elastic part 322. The elastic part 322 and the strain sensor 103 each extend along a plane parallel to the axial direction (extend along a plane orthogonal to the radial direction). The strain sensor 103 is attached so as to be capable of detecting a strain of the elastic part 322 in the direction along a plane orthogonal to the tangential direction. Accordingly, the strain sensor 103, when being a strain gauge, is attached to the elastic part 322 so as to align an orientation of a grid (gauge) (typically, a longitudinal direction of the strain gauge) to the axial direction. When the strain sensor 103 is a strain gauge, the strain of the elastic part 322 is detected as a change in a resistance value. Note that the strain sensor 103 is not limited to a strain gauge, and may be various other sensors such as a piezoelectric element.

In the radial direction, the bearing 102 is disposed at the inner side of the inner peripheral member 310 of the holder 301. The bearing 102 is held by the inner peripheral member 310 of the holder 301. The outer ring 102o of the bearing 102 is press-fitted to the inner peripheral surface 310a of the inner peripheral member 310 of the holder 301. The bearing 102 rotatably supports the shaft S with respect to the holder 301.

The holder 301 includes, at an end part at the lower side in the axial direction, a contact part 324 having a plate shape protruding toward the inner side in the radial direction. In the present embodiment, the contact part 324 protrudes toward the inner side in the radial direction from an end part of the flexure element 321 (outer peripheral member 320) of the holder 301 at the lower side in the axial direction. In the axial direction, the contact part 324 opposes the inner peripheral member 310 across the slit 343. A dimension of the contact part 324 in the tangential direction is the same as dimensions of the elastic part 322 and the fixing part 123 in the tangential direction. However, the contact part 324 may be formed in an annular shape about the X axis. In the axial direction, the contact part 324 is in contact with the end surface of the outer ring 102o of the bearing 102 at the lower side. As a result, the contact part 324 supports the bearing 102 in a state of restricting the downward movement of the bearing 102 in the axial direction.

The torque sensor 300 according to the present embodiment similarly has the characteristics of the torque sensor 100 according to the first embodiment described above. In addition, in the torque sensor 300 according to the present embodiment, the contact part 324 having a plate shape protruding toward the inner side in the radial direction from the outer peripheral member 320 of the holder 301 supports the bearing 102 in the axial direction. As a result, even when a preload is applied to the bearing 102 toward the lower side in the axial direction, the contact part 324 is elastically deformed, making it possible to absorb the influence of the preload. Furthermore, the contact part 324 is not provided at the inner peripheral member, and thus the influence of the preload is not transmitted to the elastic part 322 via the connecting part 330.

Accordingly, in the torque sensor 300 according to the present embodiment, the preload applied to the bearing 102 is suppressed from appearing as the strain of the elastic part 322, and the strain sensor 103 can detect the stress with high sensitivity.

### Fourth Embodiment

Next, a fourth embodiment being one example of the present invention will be described with reference to the drawings. FIG. 5 is a cross-sectional view illustrating a state of a torque sensor 400 according to the present embodiment being mounted on the shaft S and an external device 40. The torque sensor 400 has the same configuration as the configuration of the torque sensor 100 according to the first embodiment except that a holder 401 is provided instead of the holder 101 and the external device 10 is replaced with the external device 40. The holder 401 has the same configuration as the configuration of the holder 101 according to the first embodiment except that an inner peripheral member 410 is provided instead of the inner peripheral member 110 and a gap 440 is formed with a shape different from the shape of the gap 140. Members and components having the same functions and configurations as the members and components of the first embodiment are given the same reference signs, and detailed descriptions of the members and components will be omitted below.

The holder 401 has a substantially square tubular shape in plan view, and includes the inner peripheral member 410 and the outer peripheral member 120. The inner peripheral member 410 is a member having a tubular shape extending in the axial direction and including an inner peripheral surface 410a having a cylindrical shape about the X axis. In the axial direction, a dimension of the inner peripheral member 410 is less than the dimension of the outer peripheral member 120. In the axial direction, an end surface at the upper side of the inner peripheral member 410 and an end surface at the upper side of the outer peripheral member 120 are on the same plane. At end parts of the inner peripheral member 410 at the outer sides in the radial direction and at the upper side in the axial direction, the four connecting parts 130 having a substantially rectangular shape in plan view protrude radially from the inner peripheral member 410 toward the outer side in the radial direction. The four connecting parts 130 are disposed at positions having four-fold symmetry about the X axis.

As illustrated in FIG. 5, in the radial direction, the flexure element 121 (outer peripheral member 120) opposes the inner peripheral member 410 across the gap 440 extending in the tangential direction. The gap 440 includes a through hole 441 having a circular shape or a substantially circular shape in a side view, and a slit 442 connected to the lower side of the through hole 441 in the axial direction and having a width (dimension in the radial direction) narrower than a diameter of the through hole 441. The slit 442 is widened so as to recess toward the inner side in the radial direction in an arc shape in a side view while extending toward the lower side in the axial direction.

With the presence of the through hole 441, a recessed part 441a recessed toward the outer side in the radial direction is formed at the surface of the flexure element 121 (outer peripheral member 120) at the inner side in the radial direction (other side in the radial direction, the arrow d direction), a recessed part 441b recessed toward the upper side in the axial direction is formed at the surface of the connecting part 130 at the lower side in the axial direction, and a recessed part 441c recessed toward the inner side in the radial direction is formed at a surface of the inner peripheral member 410 at the outer side in the radial direction. Note that the recessed part 441a, the recessed part 441b, and the recessed part 441c are connected as a smooth, continuous curved surface without boundary parts being defined. In the radial direction, the elastic part 122 and the inner peripheral member 410 oppose each other across the gap 440.

In the radial direction, the bearing 102 is disposed at the inner side of the inner peripheral member 410 of the holder 401. The bearing 102 is held by the inner peripheral member 410 of the holder 401. The outer ring 102o of the bearing 102 is press-fitted to the inner peripheral surface 410a of the inner peripheral member 410 of the holder 401. The bearing 102 rotatably supports the shaft S with respect to the holder 401.

The external device 40 includes a protruding part 42 protruding to the upper side in the axial direction toward the bearing 102 and formed in an annular shape about the X axis. However, the protruding part 42 may be a plurality of convex parts disposed on a circumference about the X axis. In the axial direction, the protruding part 42 is in contact with an end surface of the bearing 102 at the lower side. As a result, the protruding part 42 supports the bearing 102 in a state of restricting the downward movement of the bearing 102 in the axial direction. More specifically, in the axial direction, the protruding part 42 supports the bearing 102 by being in contact with the end surface of the outer ring 102o at the lower side.

The torque sensor 400 according to the present embodiment similarly has the characteristics of the torque sensor 100 according to the first embodiment described above. In addition, in the torque sensor 400 according to the present embodiment, the protruding part 42 supports the bearing 102 in the axial direction, and thus the preload in the axial direction applied to the bearing 102 does not appear as the strain of the elastic part 122, and the strain sensor 103 can detect the stress with higher sensitivity.

### Fifth Embodiment

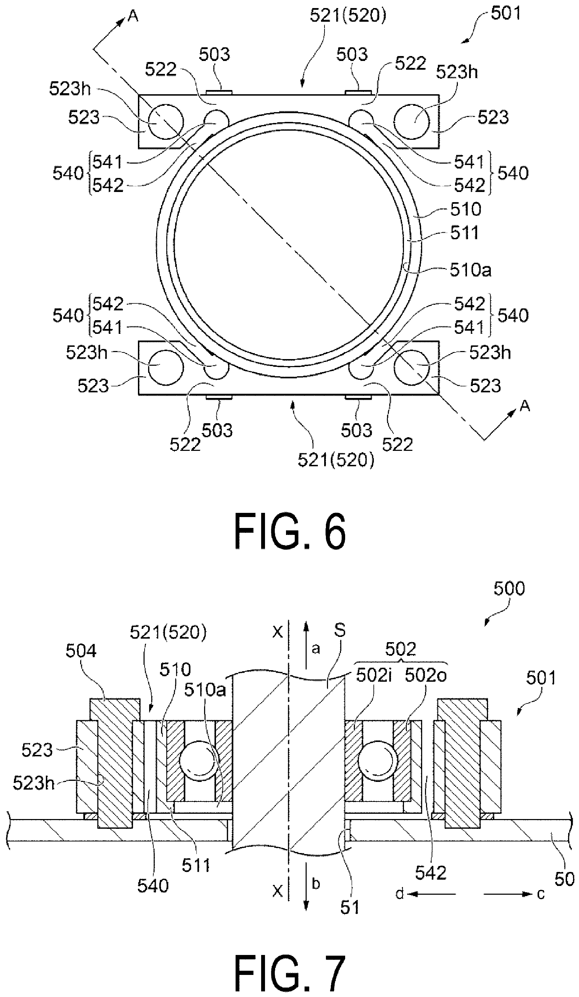

Next, a fifth embodiment being one example of the present invention will be described with reference to the drawings. FIG. 6 is a plan view of a holder 501 and strain sensors 503 of a torque sensor 500 according to the present embodiment. FIG. 7 is a cross-sectional view illustrating a cross section corresponding to an A-A cross section in FIG. 6 in a state of the torque sensor 500 being mounted on the shaft S and an external device 50.

The torque sensor 500 includes the holder 501, a bearing 502, and the strain sensors 503. In the present embodiment, the bearing 502 is a ball bearing including an inner ring 502i, an outer ring 502o, and rolling elements. Note that the bearing 502 is not limited to a ball bearing, and various other bearings, such as a sleeve bearing, for example, may be used.

The holder 501 has a substantially square tubular shape in plan view, and includes an inner peripheral member 510 and an outer peripheral member 520. The inner peripheral member 510 is a member having a cylindrical shape extending in the axial direction and including an inner peripheral surface 510a having a cylindrical shape about the X axis. The outer peripheral member 520 is a member disposed at an outer side of the inner peripheral member 510 in the radial direction.

In the axial direction, a dimension of the inner peripheral member 510 is the same as a dimension of the outer peripheral member 520. In the axial direction, an end surface at the upper side and an end surface at the lower side of the inner peripheral member 510 are respectively on the same plane with an end surface at the upper side and an end surface at the lower side of the outer peripheral member 520.

In the radial direction, two flexure elements 521 are connected to the outer side of the inner peripheral member 510 so as to be mirror-symmetrical with respect to a plane including the X axis. The flexure element 521 is a deformation part deformed by receiving stress, and is elastically deformed or plastically deformed by receiving stress. The flexure element 521 has a substantially rectangular parallelepiped shape with the tangential direction as a longitudinal direction, and has a shape in a central part in the longitudinal direction to about half of the dimension in the radial direction being cut off in an arc shape along an outer shape of the inner peripheral member 510. The two flexure elements 521 form the outer peripheral members 520 in the present embodiment. The two flexure elements 521 have the same configuration, and thus only one flexure element 521 will be described in detail below, and detailed description of the other flexure element 521 will be omitted.

As illustrated in FIG. 6, two through holes 541 having a circular shape or a substantially circular shape in plan view and penetrating in the axial direction are formed in the vicinities of intermediate points between the central part and both end parts of the flexure element 521 in the longitudinal direction, one at each intermediate point. Further, the flexure element 521 is formed with two slits 542 extending in the tangential direction from the vicinity of the connecting part with the inner peripheral member 510 at the surface opposing the inner peripheral member 510 to the through hole 541. A width of the slit 542 is narrower than a diameter of the through hole 541. The through hole 541 and the slit 542 constitute a gap 540.

The flexure element 521 (outer peripheral member 520) includes an elastic part 522. In a part of the flexure element 521 extending along a plane orthogonal to the radial direction, a region in the vicinity of the through hole 541 is the elastic part 522. In the radial direction, the elastic part 522 and the inner peripheral member 510 oppose each other across the gap 540. The elastic part 522 includes a recessed part (part of the through hole 541) recessed in the radial direction at the surface opposing the inner peripheral member 510. With the presence of the through hole 541, the elastic part 522 has a thin thickness as compared with other parts of the flexure element 521 (outer peripheral member 520), and elastic strain deformation readily occurs.

With each flexure element 521 including the elastic part 522, the torque sensor 500, as a whole, includes the plurality of (four in the present embodiment) elastic parts 522. In the circumferential direction, the plurality of elastic parts 522 are disposed side by side at the outer side of the holder 501 (outer side in the radial direction than the inner peripheral member 510).

Two of the strain sensors 503 are attached to a surface of each flexure element 521 on a side opposite to a side connected to the inner peripheral member 510. The strain sensor 503 is attached to the elastic part 522 of the flexure element 521. The elastic part 522 and the strain sensor 503 extend along a plane extending in the axial direction and a longitudinal direction of the flexure element 521. The strain sensor 503 is attached so as to be capable of detecting a strain of the elastic part 522 in a direction along a plane orthogonal to the axial direction. Accordingly, the strain sensor 503, when being a strain gauge, is attached to the elastic part 522 so as to align an orientation of a grid (gauge) (typically, a longitudinal direction of the strain gauge) to the longitudinal direction of the flexure element 521. When the strain sensor 503 is a strain gauge, the strain of the elastic part 522 is detected as a change in a resistance value. Note that the strain sensor 503 is not limited to a strain gauge, and may be various other sensors such as a piezoelectric element.

Both end sides of the flexure element 521 further in the longitudinal direction than the elastic parts 522 are fixing parts 523 connected to the external device 50. A through hole 523h having a circular shape in plan view and penetrating in the axial direction is formed in the vicinity of a central part of the fixing part 523. As illustrated in FIG. 7, a bolt 504 inserted into the through hole 523h from the upper side in the axial direction fixes the flexure element 521 to the external device 50 via a spacer 505. Thus, the holder 501 is fixed to the external device 50.

In the radial direction, the bearing 502 is disposed at the inner side of the inner peripheral member 510 of the holder 501. The bearing 502 is held by the inner peripheral member 510 of the holder 501. The inner ring 502i of the bearing 502 is bonded or press-fitted to the outer peripheral surface (surface at the outer side in the radial direction) of the shaft S having a columnar shape. Thus, the inner ring 502i of the bearing 502 is fixed to the shaft S. The outer ring 502o of the bearing 502 is press-fitted to the inner peripheral surface 510a of the inner peripheral member 510 of the holder 501. The bearing 502 rotatably supports the shaft S with respect to the holder 501. The end part of the shaft S at the lower side in the axial direction protrudes from a through hole 51 of the external device 50 to outside the external device 50.

The holder 501 includes, at an end part at the lower side in the axial direction, a contact part 511 having an annular shape protruding toward the inner side in the radial direction. In the present embodiment, the contact part 511 protrudes toward the inner side in the radial direction from the inner peripheral member 510 of the holder 501. In the axial direction, the contact part 511 is in contact with an end surface of the outer ring 502o of the bearing 502 at the lower side. As a result, the contact part 511 supports the bearing 502 in a state of restricting a downward movement of the bearing 502 in the axial direction.

When the torque sensor 500 is used for a power-assisted bicycle, the shaft S is a crankshaft including pedals. When one of the pedals is pressed, a force acts to incline the pedal side of the shaft S downward in the vertical direction, and thus the bearing 502 tends to move in the radial direction, thereby pressing part of the holder 501 toward the outer side in the radial direction. In the holder 501, stress likely concentrates in the elastic part 522 of the flexure element 521, thereby causing elastic strain deformation in the elastic part 522. This strain deformation is detected by the strain sensor 503.

In the torque sensor 500 according to the present embodiment, the four elastic parts 522 with the strain sensors 503 attached are disposed side by side on the outer side of the holder 501 in the circumferential direction, so that stress in all directions can be more accurately detected. In particular, in the torque sensor 500, the two flexure elements 521 are disposed so as to be mirror-symmetrical with respect to the plane including the X axis, making it possible to detect the stress to the two directions of arrangement of the flexure elements 521 with higher sensitivity. The output of the motor of the power-assisted bicycle can be adjusted in accordance with the detected stress.

The torque sensor 500 according to the present embodiment does not use a magnetostrictive sensor but has a simple configuration including the holder 501, the bearing 502, and the strain sensors 503, thereby eliminating the need to dispose, around the shaft S, a detection coil or the like required when a magnetostrictive sensor is used and thus facilitating a reduction in size of the device. In particular, in the torque sensor 500, the number of flexure elements is as small as two, making it possible to configure the device in a compact manner and thus further reduce the size of the device. Further, processing such as adherence of a magnetic layer to the shaft S is not necessary, thus facilitating manufacture of the torque sensor 500.

In the torque sensor 500 according to the present embodiment, the elastic part 522 and the inner peripheral member 510 oppose each other across the gap 140 in the radial direction, and the elastic part 522 includes the recessed part recessed in the radial direction at the surface opposing the inner peripheral member 510. As a result, in the torque sensor 500 according to the present embodiment, the elastic part 522 of the flexure element 521 is readily strain-deformed, making it possible to detect stress with high sensitivity.

### Sixth Embodiment

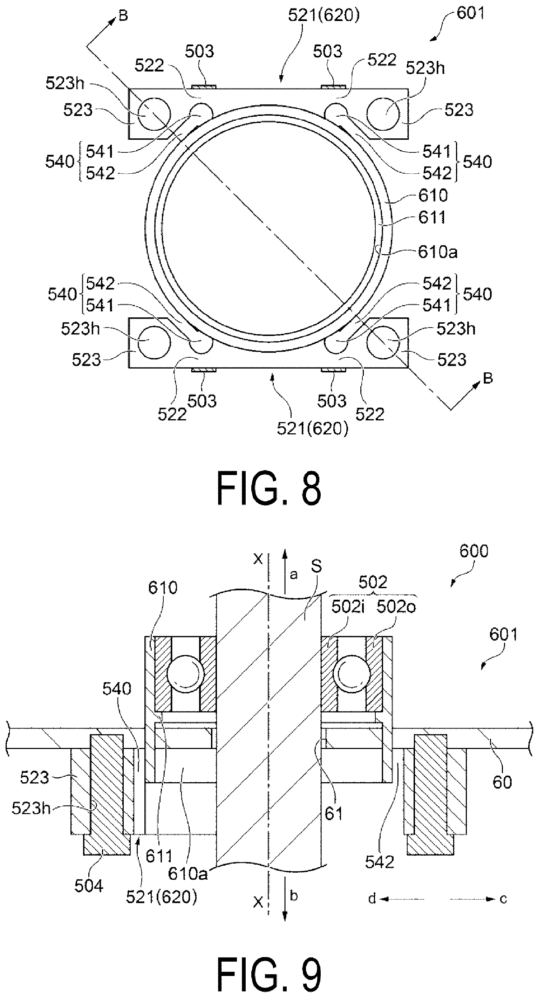

Next, a sixth embodiment being one example of the present invention will be described with reference to the drawings. FIG. 8 is a plan view of a holder 601 and the strain sensors 503 of a torque sensor 600 according to the present embodiment. FIG. 9 is a cross-sectional view illustrating a cross section corresponding to a B-B cross section in FIG. 8 in a state of the torque sensor 600 being mounted on the shaft S and an external device 60. The torque sensor 600 has the same configuration as the configuration of the torque sensor 500 according to the fifth embodiment except that the holder 601 is provided instead of the holder 501. Members and components having the same functions and configurations as the members and components of the fifth embodiment are given the same reference signs as in the fifth embodiment, and detailed descriptions of the members and components will be omitted below.

The torque sensor 600 includes the holder 601, the bearing 502, and the strain sensors 503. The holder 601 has a substantially square tubular shape in plan view, and includes an inner peripheral member 610 and an outer peripheral member 620. The inner peripheral member 610 is a member having a cylindrical shape extending in the axial direction and including an inner peripheral surface 610a having a cylindrical shape about the X axis. The outer peripheral member 620 is a member disposed at an outer side of the inner peripheral member 610 in the radial direction. An overall configuration of the holder 601 is similar to the configuration of the holder 501 of the torque sensor 500 according to the fifth embodiment, but differs from the holder 501 of the torque sensor 500 according to the fifth embodiment in that a dimension of the inner peripheral member 610 in the axial direction is long and the inner peripheral member 610 and the outer peripheral member 620 are connected so as to be shifted from each other in the axial direction.

As illustrated in FIG. 9, in the axial direction, the dimension of the inner peripheral member 610 is greater than a dimension of the outer peripheral member 620. In the axial direction, an end surface at the upper side and an end surface at the lower side of the inner peripheral member 610 are respectively disposed at an upper side with respect to an end surface at the upper side and an end surface at the lower side of the outer peripheral member 620. An end part of the outer peripheral member 620 at the upper side in the axial direction is connected to the vicinity of an end part of the inner peripheral member 610 at the lower side in the axial direction.

The holder 601 includes, at a slightly upper side from a central part in the axial direction, a contact part 611 having an annular shape protruding toward the inner side in the radial direction. In the axial direction, the contact part 611 is provided at an upper side with respect to an end part of the outer peripheral member 620 at the upper side in the axial direction. In the present embodiment, the contact part 611 protrudes toward the inner side in the radial direction from the inner peripheral member 610 of the holder 601. In the axial direction, the contact part 611 is in contact with the end surface of the outer ring 502o of the bearing 502 at the lower side. As a result, the contact part 611 supports the bearing 502 in a state of restricting the downward movement of the bearing 502 in the axial direction.

In the axial direction, a part of the inner peripheral member 610 at a lower side with respect to the contact part 611 passes through the external device 60 and extends to a lower side of the external device 60. In the axial direction, the outer peripheral member 620 is disposed at the lower side of the external device 60 (outside the external device 60). The bolt 504 is inserted into the through hole 523h formed at the fixing part 523 of the flexure element 521 of the outer peripheral member 620 from the lower side in the axial direction. The flexure element 521 is screw-fixed to the external device 60 via the spacer 505 interposed in between.

The torque sensor 600 according to the present embodiment similarly has the characteristics of the torque sensor 500 according to the fifth embodiment described above. In addition, in the torque sensor 600 according to the present embodiment, the outer peripheral member 620 is disposed outside the external device 60, further simplifying an internal structure of the external device 60 and making it possible to further reduce the size of the device.

### Seventh Embodiment

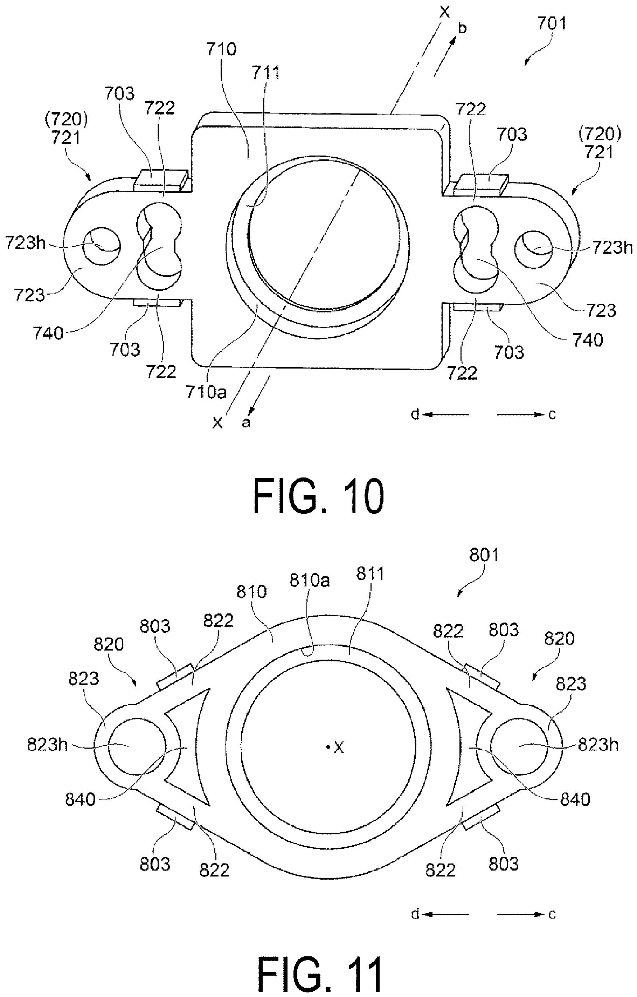

Next, a seventh embodiment being one example of the present invention will be described with reference to the drawings. FIG. 10 is a perspective view of a holder 701 and strain sensors 703 of a torque sensor according to the present embodiment.

The torque sensor according to the present embodiment includes the holder 701, a bearing (not illustrated), and the strain sensors 703. The holder 701 has a flat plate shape and includes an inner peripheral member 710 and an outer peripheral member 720. The inner peripheral member 710 is a plate-shaped member having a substantially square shape in plan view and including an inner peripheral surface 710a having a cylindrical shape about the X axis. The outer peripheral member 720 is a member disposed at an outer side of the inner peripheral member 710 in the radial direction.

Flexure elements 721 are connected at respective central parts of, among outer peripheral surfaces (surfaces at the outer side in the radial direction) of the inner peripheral member 710, two surfaces opposing each other across the X axis, one at each central part. The flexure element 721 is a member extending with the radial direction as a longitudinal direction, and an end part of the member at the outer side in the radial direction has a substantially semicircular shape in plan view. In the tangential direction, a dimension of the flexure element 721 is less than a dimension of the inner peripheral member 710. The two flexure elements 721 correspond to the outer peripheral members 720 in the present embodiment. The two flexure elements 721 have the same configuration, and thus only one flexure element 721 will be described in detail below, and detailed description of the other flexure element 721 will be omitted.

In the flexure element 721 (outer peripheral member 720), a through hole (gap) 740 penetrating in the axial direction is formed in the vicinity of a connecting part with the inner peripheral member 710. The through hole 740 has a shape of two holes having a circular shape or a substantially circular shape in plan view and aligned in the tangential direction, and being connected by a hole having a rectangular shape in plan view.

The flexure element 721 (outer peripheral member 720) includes an elastic part 722. In the flexure element 721, two parts opposing each other in the tangential direction across the through hole 740 are the elastic parts 722. With the through hole 740 formed, the elastic part 722 has a thin thickness as compared with the other parts of the flexure element 721 (outer peripheral member 720), and elastic strain deformation readily occurs.

With each flexure element 721 including the two elastic parts 722 each, the holder 701 includes, as a whole, a plurality of (four in the present embodiment) elastic parts 722. **In** the circumferential direction, the plurality of elastic parts 722 are disposed side by side at the outer side of the holder 701 (outer side in the radial direction with respect to the inner peripheral member 710).

Two of the strain sensors 703 are attached to respective outer peripheral surfaces of the flexure elements 721. The strain sensor 703 is attached to the elastic part 722. The elastic part 722 and the strain sensor 703 extend in the axial direction and a protruding direction (longitudinal direction) of the flexure element 721. The strain sensor 703 is attached so as to be capable of detecting a strain of the elastic part 722 in a direction along a plane orthogonal to the axial direction. Accordingly, the strain sensor 703, when being a strain gauge, is attached to the elastic part 722 so as to align an orientation of a grid (gauge) (typically, a longitudinal direction of the strain gauge) to the protruding direction (longitudinal direction) of the flexure element 721. When the strain sensor 703 is a strain gauge, the strain of the elastic part 722 is detected as a change in a resistance value. Note that the strain sensor 703 is not limited to a strain gauge, and may be various other sensors such as a piezoelectric element.

**In** the radial direction, outward of the elastic part 722 of the flexure element 721 is a fixing part 723 connected to an external device (not illustrated). A through hole 723h having a circular shape is formed in the vicinity of a central part of the fixing part 723. The holder 701 can be fixed to the external device by a bolt or the like via the through hole 723h.

In the radial direction, a bearing (not illustrated) is disposed at the inner side of the inner peripheral member 710 of the holder 701. The holder 701 includes, at an end part at the lower side in the axial direction, a contact part 711 having an annular shape protruding toward the inner side in the radial direction. In the present embodiment, the contact part 711 protrudes toward the inner side in the radial direction from the inner peripheral member 710 of the holder 701. In the axial direction, the contact part 711 comes into contact with an end surface of the bearing at the lower side. Thus, the contact part 711 can support the bearing in the axial direction.

When the torque sensor including the holder 701 is used for a power-assisted bicycle, the shaft S is a crankshaft including pedals. When one of the pedals is pressed, a force acts to incline the pedal side of the shaft S downward in the vertical direction, and thus the bearing tends to move in the radial direction, thereby pressing part of the holder 701 toward the outer side in the radial direction. In the holder 701, stress is likely to concentrate in the elastic part 722 of the flexure element 721, thereby causing elastic strain deformation in the elastic part 722. This strain deformation is detected by the strain sensor 703.

The torque sensor according to the present embodiment does not use a magnetostrictive sensor but has a simple configuration including the holder 701, the bearing, and the strain sensors 703, thereby eliminating the need to dispose, around the shaft, a detection coil or the like required when a magnetostrictive sensor is used and thus facilitating a reduction in size of the device. Further, processing such as adherence of a magnetic layer to the shaft is not necessary, thus facilitating manufacture of the torque sensor. In particular, in the torque sensor according to the present embodiment, the holder 701 has a flat plate shape and is fixed to the external device only by the two fixing parts 723, simplifying the structure and making a further reduction in size of the device possible.

### Eighth Embodiment

Next, an eighth embodiment being one example of the present invention will be described with reference to the drawings. FIG. 11 is a plan view of a holder 801 and strain sensors 803 of a torque sensor according to the present embodiment.

The torque sensor according to the present embodiment includes the holder 801, a bearing (not illustrated), and the strain sensors 803. The holder 801 has a flat plate shape and a substantially rhombic shape in plan view, and includes an inner peripheral member 810 and an outer peripheral member 820. The inner peripheral member 810 is a member having an annular shape and including an inner peripheral surface 810a having a cylindrical shape about the X axis. The outer peripheral member 820 is a member disposed at an outer side of the inner peripheral member 810 in the radial direction.

In the radial direction, at the outer side of the inner peripheral member 810, two fixing parts 823 having small annular shapes are disposed slightly away from the inner peripheral member 810 at positions having two-fold symmetry about the X axis. Four elastic parts 822 having a beam shape connect the inner peripheral member 810 and the two fixing parts 823 in the vicinity of four tangential lines circumscribing the inner peripheral member 810 and the two fixing parts 823. The two fixing parts 823 and the elastic parts 822 constitute the outer peripheral members 820 in the present embodiment. In the circumferential direction, the four elastic parts 822 are disposed side by side at the outer side of the holder 801 (outer side of the inner peripheral member 810 in the radial direction). A gap 840 is formed between the inner peripheral member 810 and each fixing part 823. In the radial direction, the elastic part 822 and the inner peripheral member 810 oppose each other across the gap 840.

The strain sensors 803 are attached to a surface of each elastic part 822 on a side opposite to the surface opposing the inner peripheral member 810. The elastic part 822 and the strain sensor 803 each extend along a plane parallel to the axial direction. The strain sensor 803 is attached so as to be capable of detecting a strain of the elastic part 822 in a direction along a plane orthogonal to the axial direction. Accordingly, the strain sensor 803, when being a strain gauge, is attached to the elastic part 822 so as to align an orientation of a grid (gauge) (typically, a longitudinal direction of the strain gauge) to a longitudinal direction of the elastic part 822. When the strain sensor 803 is a strain gauge, the strain of the elastic part 822 is detected as a change in a resistance value. Note that the strain sensor 803 is not limited to a strain gauge, and may be various other sensors such as a piezoelectric element.

The fixing part 823 is a part connected to an external device (not illustrated). In the radial direction, the fixing part 823 is disposed at the outer side of the elastic part 822. A through hole 823h having a circular shape is formed in the vicinity of a central part of the fixing part 823. The holder 801 can be fixed to the external device by a bolt or the like via the through hole 823h.

In the radial direction, a bearing (not illustrated) is disposed at the inner side of the inner peripheral member 810 of the holder 801. The holder 801 includes, at an end part at the lower side in the axial direction, a contact part 811 having an annular shape protruding toward the inner side in the radial direction. In the present embodiment, the contact part 811 protrudes toward the inner side in the radial direction from the inner peripheral member 810 of the holder 801. In the axial direction, the contact part 811 comes into contact with an end surface of the bearing at a lower side. Thus, the contact part 811 can support the bearing in the axial direction.

The torque sensor according to the present embodiment similarly has the characteristics of the torque sensor according to the seventh embodiment described above. In addition, in the torque sensor according to the present embodiment, the holder 801 is lightweight, making it possible to reduce the weight of the device.

The torque sensor according to the present invention has been described above with reference to preferred embodiments, but the torque sensor according to the present invention is not limited to the configurations of the embodiments described above. For example, although the torque sensors according to the embodiments described above are used in a power-assisted bicycle, the torque sensor of the present invention is not limited to a torque sensor used in a power-assisted bicycle.

In addition, the torque sensor according to the present invention can be appropriately modified and the combinations of the various configurations can be changed by a person skilled in the art according to previously known knowledge. Such modifications are of course included in the scope of the present invention as long as these modifications still include the configurations of the present invention.

### Reference Signs List

10, 40, 50, 60 External device, 42 Protruding part, 100, 200, 300, 400, 500, 600 Torque sensor, 101, 201, 301, 401, 501, 601, 701, 801 Holder, 102, 202, 302, 402, 502, 602, 702, 802 Bearing, 103, 203, 303, 403, 503, 603, 703, 803 Strain sensor, 110, 210, 310, 410, 510, 610, 710, 810 Inner peripheral member, 111, 211, 324, 511, 611, 711, 811 Contact part, 120, 220, 320, 420, 520, 620, 720, 820 Outer peripheral member, 122, 222, 322, 422, 522, 622, 722, 822 Elastic part, 123, 223, 323, 423, 523, 623, 723, 823 Fixing part, 140, 240, 340, 440, 540, 640, 740, 840 Gap

## Claims

1. A torque sensor comprising:
a holder including an inner peripheral member and an outer peripheral member;
a bearing disposed at the inner peripheral member; and
a strain sensor, wherein
the outer peripheral member includes an elastic part,
the strain sensor is attached to the elastic part, and
the elastic part and the strain sensor each extend along a plane parallel to an axial direction.

2. The torque sensor according to claim 1, comprising
a plurality of elastic parts including the elastic part, wherein
the plurality of elastic parts are disposed side by side at an outer side of the holder in a circumferential direction.

3. The torque sensor according to claim 1, wherein the elastic part, and the inner peripheral member of the holder oppose each other across a gap in a radial direction.

4. The torque sensor according to claim 3, wherein the elastic part includes a recessed part recessed in the radial direction at a surface opposing the inner peripheral member.

5. The torque sensor according to claim 3, comprising
a connecting part connecting the inner peripheral member and the outer peripheral member, the connecting part including a recessed part recessed in the axial direction.

6. The torque sensor according to claim 1, wherein the holder includes a contact part configured to come into contact with the bearing in the axial direction.

7. The torque sensor according to claim 6, wherein the contact part protrudes from the inner peripheral member of the holder in a radial direction.

8. The torque sensor according to claim 6, wherein the contact part protrudes from the outer peripheral member of the holder in a radial direction.

9. The torque sensor according to claim 1, comprising
a fixing part connected to an external device, the fixing part being disposed at an outer side of the elastic part in a radial direction.

10. The torque sensor according to claim 9, wherein the external device includes a protruding part protruding toward the bearing.
